# EUROPÄISCHE PATENTSCHRIFT

(11) **EP 3 412 512 B1**
(45) Veröffentlichungstag und Bekanntmachung des Hinweises auf die Patenterteilung: **02.06.2021**
(21) Anmeldenummer: 18169193.2
(22) Anmeldetag: 25.04.2018
(51) Int. Cl.: B60R 13/08, G10K 11/16

(54) **AKUSTIKKAPPE MIT VERBESSERTER DÄMPFUNG**
ACOUSTIC CAP WITH IMPROVED DAMPER
BOUCHON ACOUSTIQUE À AMORTISSEMENT AMÉLIORÉ

(30) Priorität: 07.06.2017 DE 102017112474
(43) Veröffentlichungstag der Anmeldung: 12.12.2018
(73) Patentinhaber: Illinois Tool Works Inc., Glenview, IL 60025 (US)
(72) Erfinder: DOMINGUEZ, David, Glenview, Illinois 60025 (US)
(74) Vertreter: HGF

(56) Entgegenhaltungen:
- EP-A1- 2 998 163
- JP-A- 2010 127 196
- US-A1- 2003 042 069

## Beschreibung

Die Erfindung betrifft das Problem der Dämmung und Dämpfung von Geräuschen im Fahrzeuginneren, die durch Geräte oder Vorrichtungen im Fahrzeug hervorgerufen werden, wie z.B. Getriebeboxen, Lüftergitter, mechanische Dämpfer, Motoren. Ziel ist eine Reduzierung der Kabinengeräusche.

Im Bereich von Luftauslässen werden im Fahrzeuginneren halboffene Akustikkappen aus einer festen Kunststoffschale und einer inneren Schaumstoffverkleidung verwendet.

In der EP 2 998 163 A1 , die den Oberbegriff des Anspruchs 1 offenbart, ist eine Motorabdeckung zur Schalldämmung offenbart, wobe diese Motorabdeckung eine Kunststoffschale umfasst und an der Kunststoffschale mittels Abstandshaltern eine aus einem Verbundwerkstoff ausgebildete Schicht zur Schalisolierung vorgesehen ist.

Aus der JP 2010 127 196 A geht ebenfalls eine Motorabdeckung zur Schalldämpfung hervor, wobei diese Motorabdeckung eine Kunststoffschale mit Rippen aufweist und wobei ein die Rippen zumindest bereichsweise umgebendes Dämmmaterial vorgesehen ist.

Die der Erfindung zu Grunde liegende Aufgabe war es, die Reduzierung der Geräusche im Fahrzeuginneren durch Akustikkappen zu verbessern. Die Aufgabe wird durch die unabhängigen Ansprüche gelöst. Vorteilhafte Weiterbildungen sind in den Unteransprüchen definiert.

Insbesondere wird die Aufgabe gelöst durch eine Akustikkappe zur Schalldämmung und/oder -dämpfung einer Geräuschquelle in einem Fahrzeug, wobei die Akustikkappe aufweist:
- eine, bevorzugt selbsttragende und/oder formgebende, Schale als ein erster Dämm- und/oder Dämpfstoff und als eine äußere, bevorzugt die äußerste, Wand der Akustickappe, wobei die Schale aus Kunststoff gefertigt ist;
- einen zweiten Dämm- und/oder Dämpfstoff, bevorzugt Schaumstoff (z.B. PUR oder Melaminharz), als eine innere, bevorzugt die innerste, der Geräuschquelle (bzw. dem zukünftigen im Verbauzustand entsprechenden Ort der Geräuschquelle) zugewandte Wand der Akustikkappe,
wobei zwischen dem ersten und dem zweiten Dämm- und/oder Dämpfstoff ein oder mehrere Hohlräume, bevorzugt als dazwischenliegender Spalt, bevorzugt über mindestens 50%, besonders bevorzugt 75%, ganz besonders bevorzugt 95% der Fläche des zweiten Dämm- und/oder Dämpfstoffs, definiert ist oder sind.

Bei der vorliegenden Erfindung umschließt die Schale mittels ihrer Wand oder Wände einen Halbraum im Wesentlichen, bevorzugt komplett. Hierdurch kann eine Geräuschquelle vorteilhaft im Wesentlichen, bevorzugt komplett eingekapselt und somit sehr gut abgedämmt und abgedämpft werden. Hierzu weist die Akustikkappe bevorzugt mindestens eine gekrümmte Wand auf oder nur und mindestens drei nicht gekrümmte zueinander abgewinkelte Wände.

Alternativ umschließt die Schale mittels ihrer Seitenwand oder Seitenwände einen Luftkanal, bevorzugt mit einer Eingangsöffnung und einer Ausgangsöffnung. Hierdurch kann zum Beispiel eine Lüftungsöffnung als Geräuschquelle vorteilhaft abgedämmt und abgedämpft werden, ohne dass dabei der Luftstrom zu stark beeinträchtigt wird. Hierzu weist die Akustikkappe bevorzugt mindestens eine gekrümmte Wand auf oder nur und mindestens zwei nicht gekrümmte zueinander abgewinkelte Wände.

Die Akustikkappe zeichnet sich ferner dadurch aus, dass der zweite Dämm- und/oder Dämpfstoff einer Kontur der Wand oder den Wänden der Schale vollständig in einem Abstand folgt und vollständig in dem Halbraum oder Luftkanal aufgenommen ist.

Die Aufgabe wird weiterhin insbesondere gelöst durch ein Verfahren zur Herstellung einer Akustikkappe zur Schalldämmung und/oder -dämpfung einer Geräuschquelle in einem Fahrzeug, beinhaltend die Schritte:
- Herstellen aus Kunststoff, bevorzugt mittels Spritzguss, einer, bevorzugt selbsttragenden und/oder formgebenden, Schale als ersten Dämm- und/oder Dämpfstoff und als eine äußere, bevorzugt die äußerste, Wand der Akustikkappe;
- Herstellen eines zweiten Dämm- und/oder Dämpfstoffs, bevorzugt Schaumstoffs (z.B. PUR, Melaminharz);
- Anbringen des zweiten Dämm- und/oder Dämpfstoffs als eine innere, bevorzugt die innerste, der Geräuschquelle (bzw. dem zukünftigen im Verbauzustand entsprechenden Ort der Geräuschquelle) zugewandte Wand der Akustikkappe, so dass zwischen dem ersten und dem zweiten Dämm- und/oder Dämpfstoff ein oder mehrere Hohlräume, bevorzugt als dazwischenliegender Spalt, bevorzugt über mindestens 50%, besonders bevorzugt 75%, ganz besonders bevorzugt 95% der Fläche des zweiten Dämm- und/oder Dämpfstoffs, definiert ist oder sind.

Es hat sich herausgestellt, dass das Vorliegen der Hohlräume die Dämpfungseigenschaften der Akustikkappe verbessert. Bevorzugt ist mindestens eines, bevorzugt alle der folgenden Außenmaße der Akustikkappe kleiner gleich des jeweils angegebenen Maximalwerts: Breite = maximal 20 cm, Länge = maximal 20 cm, Höhe = maximal 20 cm. Die Geräuschquelle ist z.B. eine Getriebebox, ein Lüftergitter, ein mechanischer Dämpfer, ein elektrischer Stellmotor, bewegliche Teile, die gegeneinander stoßen und dabei klappern können. Die Schale als nur äußere (und nicht äußerste) Wand der Akustikkappe kann z.B. durch eine weitere Materialschicht abgedeckt sein. Der zweite Dämm- und/oder Dämpfstoff als innere (und nicht innerste) Wand der Akustikkappe kann z.B. durch eine weitere Materialschicht abgedeckt sein. Bei Verwendung eines Schaumstoffs, kann ein offen- oder geschlossenporiger Schaumstoff verwendet werden. Bevorzugt ist er offenporig, ganz besonders bevorzugt luftdurchlässig für eine bessere Dämpfung. Bevorzugt ist die Kappe als Nachrüstteil vorgesehen. Bevorzugt weist der erste Dämm- und/oder Dämpfstoff vornehmlich eine schalldämmende Eigenschaft auf, während der zweite Dämm- und/oder Dämpfstoff eine vornehmlich schalldämpfende Eigenschaft aufweist.

In einem weiteren Ausführungsbeispiel der vorliegenden Erfindung weist die Schale an ihrer inneren Seite einen oder mehrere Abstandhalter auf und der zweite Dämm- und/oder Dämpfstoff liegt an dem einen oder den mehreren Abstandhaltern an. In einem weiteren erfindungsgemäßen Verfahren wird der zweite Dämm- und/oder Dämpfstoff beim Anbringen an den einen oder die mehreren Abstandhalter angelegt.

Hierdurch ist eine vorteilhafte und einfache Ausbildung und Mindestgröße des Hohlraums oder der Hohlräume gegeben. Der Luftspalt bzw. akustische Abstand, welcher zwischen den beiden Dämm- und/oder Dämpfstoffen vorliegt kann durch den einen oder die mehreren Abstandshalter optimal eingestellt und sichergestellt werden. Bevorzugt geben der eine oder die mehreren Abstandhalter die Größe des einen oder der mehreren Hohlräume vor.

In einem weiteren Ausführungsbeispiel der vorliegenden Erfindung sind der eine oder die mehreren Abstandhalter integral mit der Schale ausgeformt. In einem weiteren erfindungsgemäßen Verfahren werden der eine oder die mehreren Abstandhalter beim Herstellen der Schale mit ausgeformt. Hierdurch wird mit nur zwei Dämm- und/oder Dämpfmaterialien und auf eine einfache Weise eine Sandwichstruktur mit Hohlräumen geschaffen.

In einem weiteren Ausführungsbeispiel der vorliegenden Erfindung ist oder sind der eine oder die mehreren Abstandhalter als eine oder mehrere Rippen gebildet und/oder bilden ein Gitter aus Rippen. In einem weiteren erfindungsgemäßen Verfahren werden entsprechende Abstandhalter ausgeformt. Hierdurch ist eine sehr vorteilhafte Form der Abstandhalter gegeben, insbesondere im Hinblick auf eine Fertigung im Spritzgussverfahren.

In einem weiteren Ausführungsbeispiel der vorliegenden Erfindung weist die Schale Befestigungsmittel zur Befestigung der Akustikkappe im Fahrzeug auf, z.B. ein oder mehrere Ösen und/oder Haken. Hierdurch kann die Kappe einfach im Fahrzeug befestigt werden. Bevorzugt sind die die Befestigungsmittel integral mit der Schale ausgeformt, bevorzugt mittels Spritzguss. In einem entsprechenden erfindungsgemäßen Verfahren werden die Befestigungsmittel bevorzugt integral mit der Schale spritzgegossen.

In einem weiteren Ausführungsbeispiel der vorliegenden Erfindung ist der zweite Dämm- und/oder Dämpfstoff mittels Clips an die Schale befestigt. In einem weiteren erfindungsgemäßen Verfahren wird der zweite Dämm- und/oder Dämpfstoff mittels Clips an die Schale befestigt. Hierdurch wird der zweite Dämm- und/oder Dämpfstoff vorteilhaft in der korrekten Position gehalten, wobei die Montage aufgrund der Clips einfach ist.

In einem weiteren Ausführungsbeispiel der vorliegenden Erfindung ist der zweite Dämm- und/oder Dämpfstoff ein Schaumstoff, welcher, bevorzugt direkt, als, bevorzugt durchgehende Schicht auf den einen oder die mehreren Abstandhalter angeschäumt ist. In einem weiteren erfindungsgemäßen Verfahren erfolgt das Herstellen und Anbringen des zweiten Dämm- und/oder Dämpfstoffs in einem Schritt mittels Anschäumen des zweiten Dämm- und/oder Dämpfstoffs an den einen oder die mehreren Abstandhalter. Hierdurch wird die Herstellung automatisierbar. Bevorzugt sind hierfür Abstandhalter voneinander so gering voneinander beabstandet, dass sich eine zusammenhängende Schaumschicht beim Anschäumen bildet.

Die Erfindung soll nun anhand von Zeichnungen beispielhaft weiter veranschaulicht werden. Hierbei zeigen:
- Fig. 1a,: einen Schnitt durch eine erfindungsgemäße Akustikkappe,
- Fig. 1b,: eine perspektivische Unteransicht der Schale der Akustikkappe aus Fig. 1a
- Fig. 2a: eine perspektivische Unteransicht einer Weiterbildung der Akustikkappe aus Fig. 1a, 1b,
- Fig. 2b: einen Schnitt durch die Akustikkappe nach Fig. 2a
- Fig. 3: eine perspektivische Ansicht einer weiteren Variante einer erfindungsgemäßen Akustikkappe.

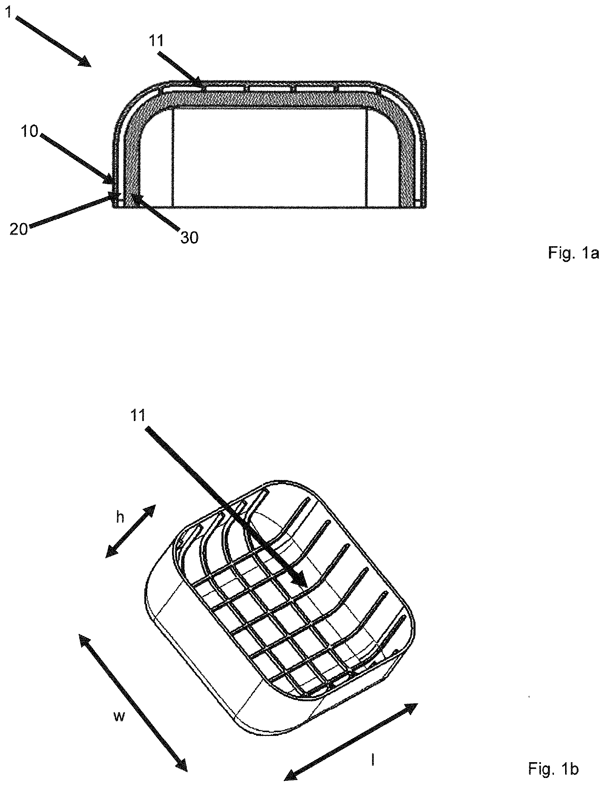

**Fig. 1a** zeigt einen Schnitt durch eine erfindungsgemäße Akustikkappe, Fig. 1b zeigt eine perspektivische Unteransicht der Schale der Akustikkappe aus Fig. 1a. Die Akustikkappe 1 ist zur Schalldämmung einer Geräuschquelle in einem Fahrzeug eingerichtet. Sie weist eine selbsttragende und formgebende Schale 10 als ein erster Dämm- und/oder Dämpfstoff und als die äußerste Wand der Akustikkappe 1 auf, wobei die Schale 10 aus spritzgegossenem Kunststoff gefertigt ist. Die Akustikkappe weist ferner einen zweiten Dämm- und/oder Dämpfstoff 30, hier ein Schaumstoff, als die innerste, der Geräuschquelle zugewandte Wand der Akustikkappe 1 auf. Zwischen dem ersten und dem zweiten Dämm- und/oder Dämpfstoff 10, 30 sind mehrere Hohlräume 20 definiert.

Weiterhin weist die Schale 10 an ihrer inneren Seite mehrere Abstandhalter 11 auf und der zweite Dämm- und/oder Dämpfstoff 30 liegt an den mehreren Abstandhaltern 11 an. Die mehreren Abstandhalter 11 sind integral mit der Schale 10 ausgeformt. Sie sind als mehrere Rippen gebildet und bilden ein Gitter aus Rippen. In Fig. 1b sind zudem Breite w, Länge I, Höhe h gezeigt. Die Schale 10 umschließt mittels ihrer Wand oder Wände einen Halbraum komplett.

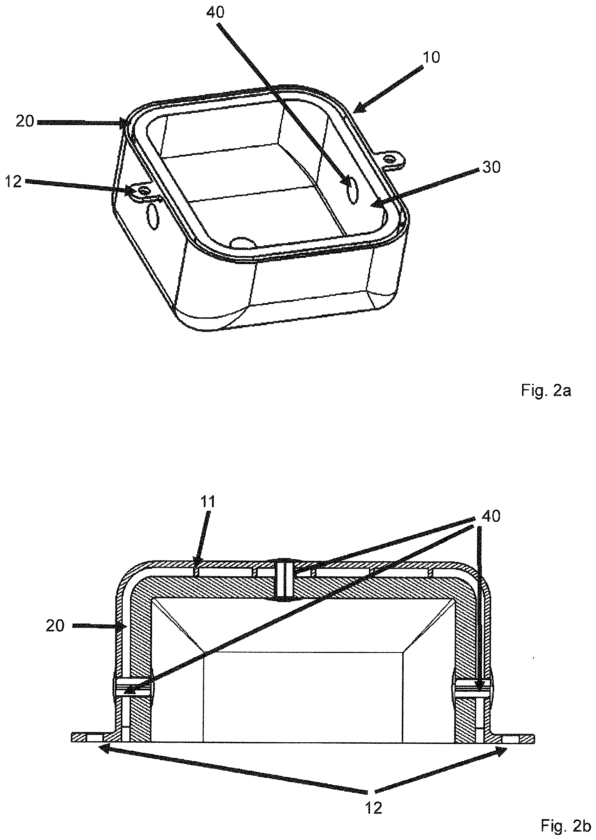

**Fig. 2a** zeigt eine perspektivische Unteransicht einer Weiterbildung der Akustikkappe aus Fig. 1a, 1b. **Fig. 2b** zeigt einen Schnitt durch die Akustikkappe nach Fig. 2a. Zusätzlich zu der Akustikkappe aus Fig. 1a und 1b weist die Schale 10 Befestigungsmittel 12 zur Befestigung der Akustikkappe 1 im Fahrzeug aufweist, hier zwei Ösen. Zudem ist der zweite Dämm- und/oder Dämpfstoff 30 mittels Clips an die Schale 10 befestigt.

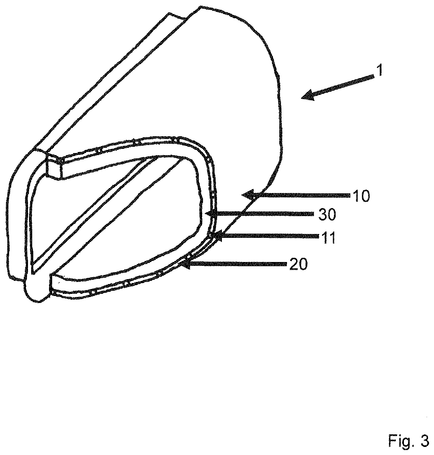

**Fig. 3** zeigt eine perspektivische Ansicht einer weiteren Variante einer erfindungsgemäßen Akustikkappe. Im Gegensatz zu der Akustikkappe 1 nach Fig. 1a, b und 2a, b umschließt die Schale 10 mittels ihrer Wände einen Luftkanal, wobei der Luftkanal eine Eingangsöffnung und einer Ausgangsöffnung aufweist. Ansonsten weist diese Akustikkappe auch die Merkmale der Akustikkappe aus Fig. 1a,b und optional auch die der Akustikkappe aus Fig. 2a,b auf.

**Bezugszeichenliste**

| | | | |
|---|---|---|---|
| 1 | Akustikkappe | 30 | zweiter Dämm- und/oder Dämpf-stoff |
| 10 | Schale, erster Dämm- und/oder Dämpfstoff | 40 | Clips |
| 11 | Abstandhalter | w | Breite |
| 12 | Befestigungsmittel | l | Länge |
| 20 | Hohlraum | h | Höhe |

### Bezugszeichenliste

- 1: Akkustikkappe
- 10: Schale, erster Dämm- und/oder Dämpfstoff
- 11: Abstandhalter
- 12: Befestigungsmittel
- 20: Hohlraum
- 30: zweiter Dämm- und/oder Dämpfstoff
- 40: Clips
- w: Breite
- l: Länge
- h: Höhe

## Patentansprüche

1. Akustikkappe (1) zur Schalldämmung und/oder -dämpfung einer Geräuschquelle in einem Fahrzeug, wobei die Akustikkappe (1) aufweist:
- eine Schale (10) als ein erster Dämm- und/oder Dämpfstoff und als eine äußere Wand der Akustikkappe (1) wobei die Schale (10) aus Kunststoff gefertigt ist; sowie
- einen zweiten Dämm- und/oder Dämpfstoff (30) als eine innere, der Geräuschquelle zugewandte Wand der Akustikkappe (1); wobei zwischen dem ersten und dem zweiten Dämm- und/oder Dämpfstoff (10, 30) ein oder mehrere Hohlräume (20) definiert ist oder sind **dadurch gekennzeichnet, dass** die Schale (10) mittels ihrer Wand oder Wände einen Halbraum im Wesentlichen, bevorzugt komplett, oder einen Luftkanal umschließt, wobei der zweite Dämm- und/oder Dämpfstoff (30) einer Kontur der Wand oder den Wänden der Schale (10) vollständig in einem Abstand folgt und vollständig in dem Halbraum oder Luftkanal aufgenommen ist.

2. Akustikkappe (1) nach Anspruch 1, wobei die Schale (10) an ihrer inneren Seite einen oder mehrere Abstandhalter (11) aufweist und der zweite Dämm- und/oder Dämpfstoff (30) an dem einen oder den mehreren Abstandhaltern (11) anliegt.

3. Akustikkappe (1) nach Anspruch 2, wobei der eine oder die mehreren Abstandhalter (11) integral mit der Schale (10) ausgeformt sind.

4. Akustikkappe (1) nach Anspruch 3, wobei der eine oder die mehreren Abstandhalter (11) als eine oder mehrere Rippen gebildet ist oder sind und/oder ein Gitter aus Rippen bilden.

5. Akustikkappe (1) nach einem der vorhergehenden Ansprüche, wobei die Schale (10) Befestigungsmittel (12) zur Befestigung der Akustikkappe (1) im Fahrzeug aufweist.

6. Akustikkappe (1) nach einem der vorhergehenden Ansprüche, wobei der zweite Dämm- und/oder Dämpfstoff (30) mittels Clips (40) an der Schale (10) befestigt ist.

7. Akustikkappe (1) nach Anspruch 2 oder einem der Ansprüche 3 bis 5, soweit auf Anspruch 2 rückbezogen, wobei der zweite Dämm- und/oder Dämpfstoff (30) ein Schaumstoff ist, welcher als Schicht auf den einen oder die mehreren Abstandhalter (11) angeschäumt ist.

8. Verfahren zur Herstellung einer Akustikkappe (1) zur Schalldämmung und/oder -dämpfung einer Geräuschquelle in einem Fahrzeug, beinhaltend die Schritte:
- Herstellen aus Kunststoff einer Schale (10) als ersten Dämm- und/oder Dämpfstoff und als eine äußere Wand der Akustikkappe (1);
- Herstellen eines zweiten Dämm- und/oder Dämpfstoffs (30);
- Anbringen des zweiten Dämm- und/oder Dämpfstoffs (30) als eine innere, der Geräuschquelle zugewandte Wand der Akustikkappe (1), so dass zwischen dem ersten und dem zweiten Dämm- und/oder Dämpfstoff (10, 30) ein oder mehrere Hohlräume (20) definiert ist oder sind
**dadurch gekennzeichnet, dass**
die Schale (10) mittels ihrer Wand oder Wände einen Halbraum im Wesentlichen, bevorzugt komplett, oder einen Luftkanal umschließt,
wobei der zweite Dämm- und/oder Dämpfstoff (30) einer Kontur der Wand oder den Wänden der Schale (10) vollständig in einem Abstand folgt und vollständig in dem Halbraum oder Luftkanal aufgenommen ist.

## Claims

1. Acoustic cap (1) for sound proofing and/or damping of a noise source in a vehicle, wherein the acoustic cap (1) comprises:
- a shell (10) as a first proofing and/or damping material and as an outer wall of the acoustic cap (1), wherein the shell (10) is made of plastic; and
- a second proofing and/or damping material (30) as an inner, noise source facing wall of the acoustic cap (1), wherein
one or multiple hollow spaces (20) is or are defined between the first and the second proofing and/or damping material (10, 30),
**characterized in that**
the shell (10) encloses a half space substantially, preferably completely, or an air channel, by means of its wall or walls,
wherein the second proofing and/or damping material (30) entirely follows a contour of the wall or the walls of the shell (10) with a spacing and is accommodated entirely in the half space or air channel.

2. Acoustic cap (1) according to Claim 1, wherein the shell (10) comprises one or multiple spacers (11) on its inner face and the second proofing and/or damping material (30) lies against the one or multiple spacers (11) .

3. Acoustic cap (1) according to Claim 2, wherein the one or multiple spacers (11) are integrally formed with the shell (10).

4. Acoustic cap (1) according to Claim 3, wherein the one or multiple spacers (11) are built as one or multiple ribs and/or build a grid of ribs.

5. Acoustic cap (1) according to one of the preceding claims, wherein the shell (10) comprises fastening means (12) for fastening the acoustic cap (1) in the vehicle.

6. Acoustic cap (1) according to one of the preceding claims, wherein the second proofing and/or damping material (30) is fastened to the shell (10) by means of clips (40).

7. Acoustic cap (1) according to Claim 2 or one of Claims 3 to 5, where referred back to Claim 2, wherein the second proofing and/or damping material (30) is a foam material, which is foamed onto the one or the multiple spacers (11) as a layer.

8. Method for manufacturing an acoustic cap (1) for sound proofing and/or damping of a noise source in a vehicle, comprising the steps:
- manufacturing a shell (10) of plastic as a first proofing and/or damping material and as an outer wall of the acoustic cap (1);
- manufacturing a second proofing and/or damping material (30) ;
- placing the second proofing and/or damping material (30) as an inner, noise source facing wall of the acoustic cap (1), such that between the first and the second proofing and/or damping material (10, 30) one or multiple hollow spaces (20) is or are defined,
**characterized in that**
the shell (10) encloses a half space substantially, preferably completely, or an air channel, by means of its wall or walls,
wherein the second proofing and/or damping material (30) entirely follows a contour of the wall or the walls of the shell (10) with a spacing and is accommodated entirely in the half space or air channel.

## Revendications

1. Capuchon acoustique (1) servant à l'isolation et/ou l'amortissement acoustique d'une source de bruit dans un véhicule, le capuchon acoustique (1) présentant :
- une coque (10) en tant que premier matériau isolant et/ou amortissant et en tant que paroi extérieure du capuchon acoustique (1), la coque (10) étant fabriquée en matière plastique ; ainsi que
- un deuxième matériau isolant et/ou amortissant (30) en tant que paroi intérieure, tournée vers la source de bruit, du capuchon acoustique (1) ; dans lequel une ou plusieurs cavités (20) est/sont définie(s) entre le premier et le deuxième matériau isolant et/ou amortissant (10, 30),
**caractérisé en ce que** la coque (10) entoure substantiellement, de préférence complètement, un demi-espace ou un canal d'air au moyen de sa paroi ou de ses parois, dans lequel le deuxième matériau isolant et/ou amortissant (30) suit complètement un contour de la paroi ou des parois de la coque (10) à distance et est reçu complètement dans le demi-espace ou le canal d'air.

2. Capuchon acoustique (1) selon la revendication 1, dans lequel la coque (10) présente sur sa face intérieure un ou plusieurs écarteurs (11), et le deuxième matériau isolant et/ou amortissant (30) est adjacent audit un ou aux plusieurs écarteurs (11).

3. Capuchon acoustique (1) selon la revendication 2, dans lequel ledit un ou les plusieurs écarteurs (11) est/sont formé(s) d'un seul tenant avec la coque (10).

4. Capuchon acoustique (1) selon la revendication 3, dans lequel ledit un ou les plusieurs écarteurs (11) est/sont formé(s) sous la forme d'une ou de plusieurs nervures ou forme(nt) une grille de nervures.

5. Capuchon acoustique (1) selon l'une quelconque des revendications précédentes, dans lequel la coque (10) présente des moyens de fixation (12) pour fixer le capuchon acoustique (1) dans le véhicule.

6. Capuchon acoustique (1) selon l'une quelconque des revendications précédentes, dans lequel de deuxième matériau isolant et/ou amortissant (30) est fixé à la coque (10) au moyen d'agrafes (40).

7. Capuchon acoustique (1) selon la revendication 2 ou l'une des revendications 3 à 5 lorsqu'elle dépend de la revendication 2, dans lequel le deuxième matériau isolant et/ou amortissant (30) est une mousse synthétique qui est expansée sous la forme d'une couche sur ledit un ou les plusieurs écarteurs (11).

8. Procédé de fabrication d'un capuchon acoustique (1) servant à l'isolation et/ou l'amortissement acoustique d'une source de bruit dans un véhicule, comprenant les étapes consistant à :
- fabriquer en matière plastique une coque (10) en tant que premier matériau isolant et/ou amortissant et en tant que paroi extérieure du capuchon acoustique (1) ;
- fabriquer un deuxième matériau isolant et/ou amortissant (30) ;
- installer le deuxième matériau isolant et/ou amortissant (30) sous la forme d'une paroi intérieure, tournée vers la source de bruit, du capuchon acoustique (1) de sorte qu'entre le premier et le deuxième matériau isolant et/ou amortissant (10, 30), une ou plusieurs cavités (20) est/sont définie(s),
**caractérisé en ce que** la coque (10) entoure substantiellement, de préférence complètement, un demi-espace ou un canal d'air au moyen de sa paroi ou de ses parois,
dans lequel le deuxième matériau isolant et/ou amortissant (30) suit complètement un contour de la paroi ou des parois de la coque (10) à distance et est reçu complètement dans le demi-espace ou le canal d'air.
